# EUROPÄISCHE PATENTSCHRIFT

(11) **EP 3 793 920 B1**
(45) Veröffentlichungstag und Bekanntmachung des Hinweises auf die Patenterteilung: **23.08.2023**
(21) Anmeldenummer: 19708266.2
(22) Anmeldetag: 25.02.2019
(51) Int. Cl.: B65G 47/84

(54) **WEICHENVORRICHTUNG**
SWITCHING DEVICE
DISPOSITIF D'AIGUILLAGE

(30) Priorität: 14.05.2018 DE 102018207420
(43) Veröffentlichungstag der Anmeldung: 24.03.2021
(73) Patentinhaber: Bausch + Ströbel SE + Co. KG, 74532 Ilshofen (DE)
(72) Erfinder: BÖRRET, Florian, 74405 Gaildorf (DE); DOLLINGER, Svenja, 74572 Blaufelden (DE); KAISER, Klaus, 74423 Obersontheim / Hausen (DE); MUNZ, Jürgen, 74423 Obersontheim (DE); SPIELER, Daniel, 74564 Crailsheim (DE)
(74) Vertreter: Weickmann & Weickmann PartmbB
(86) Internationale Anmeldenummer: PCT/EP2019/054580
(87) Internationale Veröffentlichungsnummer: WO 2019/219253

(56) Entgegenhaltungen:
- WO-A1-01/30674
- WO-A1-2015/074801
- CN-A- 106 364 899
- US-A- 4 125 184

## Beschreibung

Die vorliegende Anmeldung betrifft eine Weichenvorrichtung für einen Übergabepunkt zwischen einem ersten und einem zweiten rotierbaren Sternrad, an welchem von dem ersten Sternrad Objekte selektiv zu dem zweiten Sternrad übergebbar sind.

Es sei darauf hingewiesen, dass in der gesamten vorliegenden Anmeldung der Begriff des "Sternrads" breit zu verstehen ist, so dass hierdurch nicht nur streng kreisförmige Transporteinheiten zu verstehen sind, sondern auch solche, deren Außenumfangsformen von einem Kreis abweichen und beispielsweise abschnittsweise abgeflacht sind oder unterschiedlich konvexe Abschnitte aufweisen. Im Extremfall können hierbei sogar vollständig geradlinige Transporteinheiten umfasst sein, die als "Räder" mit unendlichem Durchmesser aufgefasst werden können, wobei dann beispielsweise eine Übergabe von einer linearen Transporteinheit zu einer kreisförmigen Transporteinheit vorgesehen werden kann und ebenfalls von der vorliegenden Anmeldung umfasst sein soll. In jedem Fall sind außerhalb von Weichenvorrichtungen, welche dazu dienen, Objekte auf ein Sternrad zu übergeben oder von ihm zu einer anderen Transportvorrichtung zu übergeben, wenigstens in konvexen Abschnitten Vorrichtungen, wie beispielsweise Führungsschienen vorzusehen, mittels welcher die Objekte an dem entsprechenden Sternrad gehalten werden.

Die angesprochenen Weichenvorrichtungen werden unter anderem in der Verpackungsindustrie und beispielsweise auch in der chemischen und der Pharmaindustrie eingesetzt, um Objekte je nach ihrer Ausprägung separieren zu können, d.h. einzelne Objekte aus einer Reihe ähnlicher Objekte aussortieren zu können, beispielsweise wenn sie fehlerhaft sind oder ähnliches. Derartige als fehlerhaft erkannte Objekte können dann beispielsweise stromabwärts nach einer Vorrichtung, die die Fehlerhaftigkeit des jeweiligen Objektes detektiert hat, einem anderen Pfad zugeführt werden. Hierzu werden die Objekte am Außenumfang der bereits angesprochenen Sternräder geführt und von einem ersten Sternrad, von welchem sie zu einem entsprechenden Übergabepunkt angeliefert werden, dann an diesem Punkt ggf. an ein zweites Sternrad übergeben, von welchem sie auf einen anderen Pfad überführt werden, oder sie verbleiben an dem ersten Sternrad, um dann ebenfalls von dem Übergabepunkt abgeführt zu werden. Es versteht sich hierbei, dass der Begriff des "Übergabepunkts" nicht im streng geometrischen Sinne zu verstehen ist, sondern dass die Übergabe auch auf einem ausgedehnten streifenförmigen Bereich entlang der Bewegung der Objekte stattfinden kann.

Zu diesem Zweck sind bereits verschiedene Weichenvorrichtungen aus dem Stand der Technik bekannt, beispielsweise Vakuumräder, bei denen die Objekte an dem Außenumfang der jeweiligen Sternräder mittels Vakuumgreifern gehalten werden, die dann selektiv derart geschaltet werden können, dass an dem Übergabepunkt ein entsprechendes Objekt entweder an dem ersten Vakuum-Sternrad verbleibt oder an ein zweites Vakuum-Sternrad übergeben wird, so dass das Objekt anschließend auf einem gewünschten Pfad abgeführt werden kann. Derartige vakuumbetriebene Weichenvorrichtungen arbeiten zwar zuverlässig und können auch bei einem relativ niedrigen Objektabstand an den jeweiligen Sternrädern sicher betrieben werden, sie sind allerdings nicht immer in Reinräumen oder in einem Isolator einsetzbar, da beispielsweise aus pharmazeutischer Sicht aufgrund der möglichen Kontaminationen von außen durch Komponenten wie Schläuche, Vakuumpumpen, Ventile usw. eine Verunreinigung der hochsensiblen Objekte und ihrer Inhalte eintreten könnte.

Somit können in vielen Anwendungsbereichen für derartige gattungsgemäße Weichenvorrichtungen lediglich mechanische Weichen eingesetzt werden, wie sie beispielsweise aus der DE 10 2013 223 977 A1 bekannt sind. In dieser Druckschrift ist eine Vorrichtung offenbart, die zwischen zwei Sternrädern eine Weichenfunktion an einem Übergabepunkt erfüllt und hierzu ein einteiliges schwenkbares Element mit einer Führung für die von den Sternrädern getragenen Objekte aufweist, das in eine Weise verschwenkbar ist, die entweder ein Verbleiben der Objekte an dem ersten Sternrad oder eine Übergabe der Objekte an das zweite Sternrad bewirkt. Das genannte Führungselement ist allerdings zur Sicherstellung einer ausreichenden Führung der Objekte relativ lang ausgebildet, um ein Verkanten der Objekte bei ihrer Übergabe zuverlässig ausschließen zu können. Hierdurch wird jedoch andererseits eine relativ hohe Trägheit der Weichenfunktion erkauft, da sich, um aufeinanderfolgende Objekte überhaupt wirkungsvoll selektieren zu können, jeweils lediglich ein einzelnes Objekt innerhalb der Führungsvorrichtung befinden darf. Somit ist durch die Länge des Führungselements automatisch ein Mindestabstand zwischen zwei Objekten an den Sternrädern festgelegt, so dass hier relativ hohe Abstände und damit ein relativ niedriger Durchsatz an Objekten pro Zeiteinheit bei einer vorgegebenen Rotationsgeschwindigkeit der Sternräder vorgesehen werden muss. Dies geht offensichtlich auf Kosten der Effizienz der Anlage, wodurch diese im Betrieb teurer wird, wohingegen durch die vorliegende Erfindung eine sichere Weichenfunktion bei einer höheren Rotationsgeschwindigkeit der Sternräder und geringeren Objektabständen ermöglicht werden soll, was eine höhere Ausbringleistung des Systems bedeutet.

Weiterhin sei verwiesen auf die Druckschrift WO 01/30674 A1, welche ebenfalls eine Weichenvorrichtung für einen Übergabpunkt zwischen einem ersten und einem zweiten rotierbaren Sternrad lehrt, zwischen welchen Objekte selektiv übergebbar sind und welche ein zweiwandiges Weichenelement umfasst. Die WO 01/30674 A1 offenbart eine Weichenvorrichtung gemäß dem Oberbegriff des Anspruchs 1.

Es ist daher die Aufgabe der vorliegenden Erfindung, eine gattungsgemäße Weichenvorrichtung bereitzustellen, die einerseits rein mechanisch arbeitet und daher auch in Umgebungen eingesetzt werden kann, in denen aufgrund der Gefahr von Kontaminierungen nicht auf vakuumbetriebene Weichen zurückgegriffen werden kann, und die andererseits verglichen mit bisher bekannten gattungsgemäßen Vorrichtungen eine deutlich erhöhte Taktzahl erlauben kann, ohne dass hierzu die Rotationsgeschwindigkeit der Sternräder erhöht werden muss.

Zur Lösung dieser Aufgabe umfasst die erfindungsgemäße Weichenvorrichtung ein zweiwandiges erstes Weichenelement, dessen erste und zweite Wand sich derart um den Übergabepunkt herum erstrecken, dass zwischen ihnen ein Durchgang für die Objekte gebildet ist, wobei das erste Weichenelement zwischen einer ersten Position und einer zweiten Position verlagerbar gehaltert ist, wobei in der ersten Position in den Durchgang des ersten Weichenelements einlaufende Objekte an dem ersten Sternrad verbleiben und in der zweiten Position einlaufende Objekte an das zweite Sternrad übergeben werden; ein zweites und ein drittes Weichenelement, welche derart angeordnet und gehaltert sind, dass sie in der ersten Position und der zweiten Position des ersten Weichelements jeweils Verlängerungen der ersten bzw. zweiten Wand des ersten Weichenelements bilden und hierzu ebenfalls jeweils zwischen einer jeweiligen ersten und zweiten Position verlagerbar sind; und eine Überführungsvorrichtung, welche dazu eingerichtet ist, die Überführung des ersten bis dritten Weichenelements durchzuführen, indem die Überführung von der jeweiligen ersten Position in die jeweilige zweite Position derart bewirkt wird, dass zunächst eine Überführung des ersten und dritten Weichenelements ausgelöst wird und anschließend eine Überführung des zweiten Weichenelements ausgelöst wird, und die Überführung von der jeweiligen zweiten Position in die jeweilige erste Position derart bewirkt wird, dass zunächst eine Überführung des ersten und zweiten Weichenelements ausgelöst wird und anschließend eine Überführung des dritten Weichenelements ausgelöst wird.

Durch diese wenigstens dreiteilige Ausbildung der erfindungsgemäßen Weichenvorrichtung mit zwei möglichen Arbeitspositionen zur selektiven Zuweisung der Objekte an das erste oder zweite Sternrad wird es möglich, ein Überführen des ersten und dritten Weichenelements beispielweise von ihrer ersten in ihre zweite Position jeweils bereits dann zu beginnen, wenn sich im Bereich des zweiten Weichenelements noch ein Objekt an dem ersten Sternrad befindet, das in einem früheren Selektionsschritt an diesem verblieben ist.

Die anschließende Überführung des zweiten Weichenelements wird daher erst ausgelöst, wenn das genannte Objekt aus einem früheren Selektionsprozess mit der Rotation des ersten Sternrads weit genug weiterrotiert ist, so dass sich das zweite Weichenelement hinter diesem befindet. Entsprechendes gilt für die Überführung der einzelnen Weichenelemente von ihrer jeweiligen zweiten in ihre jeweilige erste Position, wobei in diesem Falle zunächst die Überführung des ersten und zweiten Weichenelements und anschließend die Überführung des dritten Weichenelements ausgelöst wird. Indem somit die Überführung insbesondere des ersten Weichenelements schon zu einem Zeitpunkt ausgelöst wird, zu dem sich noch ein Objekt aus einem früheren Selektionsprozess im Bereich eines der stromabwärtigen Weichenelemente befindet, kann der Abstand zwischen den einzelnen Objekten an den Umfängen der Sternräder verringert werden, wodurch mit der vorliegenden Erfindung höhere Rotationsgeschwindigkeiten der Sternräder und geringere Objektabstände möglich sind, wodurch wiederum eine höhere Ausbringleistung und somit ein effizienterer Betrieb einer derartigen Weichenvorrichtung gegenüber den oben beschriebenen, aus dem Stand der Technik bekannten Vorrichtungen erzielt werden kann.

Es sei an dieser Stelle lediglich noch festgehalten, dass beispielsweise im Fall der Überführung von der ersten in die zweite Position eine leichte Verzögerung zwischen dem Auslösen der Überführung des ersten und des dritten Weichenelements vorgesehen werden kann, so dass diese nicht notwendigerweise absolut gleichzeitig mit ihrer Überführungsbewegung beginnen müssen. Derartige Feinabstimmungen liegen hierbei im Bereich des Fachmanns und können von der tatsächlichen Auslegung der gesamten Anlage abhängen, wobei hierbei beispielsweise Parameter wie die Umfänge der Sternräder in Betracht gezogen werden können. In jedem Fall ist jedoch ein merklicher zeitlicher Abstand zwischen dem Auslösen der jeweils zeitlich ersten beiden Überführungsbewegungen von Weichenelementen und dem Auslösen der Überführung des zeitlich nachfolgenden Weichenelements vorzusehen, um die erfindungsgemäße Wirkung zu erzielen.

Zusätzlich kann vorgesehen werden, die erste und zweite Wand des ersten Weichenelements individuell verlagerbar auszubilden und die Überführungsvorrichtung dazu einzurichten, die beiden Wände individuell zu verlagern. Dies kann insbesondere in Anwendungsfällen vorteilhaft sein, in welchen die Geometrien der zu transportierenden Objekte von rein kreisförmigen Querschnitten abweichen, so dass in diesem Fall auch bereits die Überführung des ersten Weichenelements zwischen seinen beiden möglichen Positionen nicht integral sondern sequentiell hinsichtlich seiner beiden Wände ablaufen kann.

Ferner kann auch eine größere Anzahl von Weichenelementen als drei vorgesehen werden, beispielsweise zusätzliche vierte und fünfte Weichenelemente, welche wiederum in ihren entsprechenden Arbeitspositionen Verlängerungen des zweiten bzw. dritten Weichenelements bilden. Die optimale Anzahl von Weichenelementen kann sich hierbei nach der geometrischen Ausprägung der zu transportierenden Objekte richten, ebenso wie die Größe und Form der einzelnen Weichenelemente ebenfalls von der Objektausprägung abhängig gewählt werden kann.

In einer beispielhaften Ausführungsform kann die Überführungsvorrichtung dazu eingerichtet sein, die jeweilige Überführung des ersten bis dritten Weichenelements, und gegebenenfalls weiterer Weichenelemente, mittels eines Schwenkens um eine gemeinsame Schwenkachse durchzuführen. Eine derartige Ausgestaltung entspricht bereits der gewünschten Geometrie der durch die Weichenelemente gebildeten Führungsbahn für die Objekte und ist somit eine bevorzugte Wahl. Alternativ zu einem derartigen Schwenken könnte jedoch auch eine komplexere Überführung der einzelnen Weichenelemente zwischen ihren jeweiligen Arbeitspositionen vorgesehen werden, beispielsweise wenn die Geometrie der Gesamtanlage dies erfordert. Hierbei könnte beispielsweise an kombinierte Dreh- und Schubbewegungen gedacht werden.

Als weitere Maßnahme zur Verringerung der möglichen Abstände der Objekte an den Umfängen der beiden Sternräder können die Trennlinie zwischen der ersten Wand des ersten Weichenelements und dem zweiten Weichenelement und/oder die Trennlinie zwischen der zweiten Wand des ersten Weichenelements und dem dritten Weichenelement schräg zur Erstreckungsrichtung der jeweiligen Wand verlaufend gebildet sein, insbesondere einem Kreisbogen folgend, so dass eine ungehinderte Bewegung der Weichenelemente zueinander möglich ist. Da auf diese Weise das erste Weichenelement jeweils in eine Hinterschneidung hinter einem stromabwärtigen Objekt hineinschwenken kann, wird der zwischen den Objekten vorgesehene Raum an den Umfängen der Sternräder durch das erste Weichenelement zu einem frühestmöglichen Zeitpunkt aufgefüllt, so dass, wie bereits angesprochen, der Abstand zwischen den Objekten an den Sternrädern weiter verringert werden kann.

In einer möglichen Ausführungsform kann jedem aus dem ersten bis dritten Weichenelement zu dessen Überführung zwischen der jeweiligen ersten und zweiten Position eine eigene Antriebsvorrichtung zugeordnet sein, welche Antriebsvorrichtungen durch die Überführungsvorrichtung koordiniert betreibbar sind. Hierbei kann wenigstens eine der Antriebsvorrichtungen, vorzugsweise sämtliche der Antriebsvorrichtungen, wenigstens einen elektrischen Antrieb, insbesondere einen Stellmotor, oder beispielsweise auch einen pneumatischen Antrieb umfassen. Derartige beispielhaft erwähnte elektrische Stellmotoren sind in jüngerer Zeit äußerst kostengünstig am Markt zu erhalten und arbeiten mit einer hervorragenden Präzision, so dass sie für die genannte Aufgabe bestens geeignet sind. Dennoch wäre es beispielsweise auch möglich, lediglich einen einzelnen Antriebsmotor für die mehreren Weichenelemente vorzusehen, wobei dann mechanische Umlenk- und Steuervorrichtungen vorgesehen werden müssten.

Gemäß einem weiteren Aspekt betrifft die vorliegende Erfindung eine Transportvorrichtung für Objekte, insbesondere zylinderförmige Objekte wie Flaschen und/oder Ampullen, umfassend ein erstes und ein zweites rotierbares Sternrad, welche derart angeordnet sind, dass zwischen ihnen ein Übergabepunkt gebildet ist, sowie eine erfindungsgemäße Weichenvorrichtung zur selektiven Übergabe von Objekten von dem ersten Sternrad zu dem zweiten Sternrad. Hierbei kann die Überführungsvorrichtung betriebsmäßig mit einer Steuervorrichtung für die beiden Sternräder derart gekoppelt sein, dass die Überführung der Weichenelemente an die Rotationsgeschwindigkeit der Sternräder angepasst oder anpassbar ist.

Hierbei ist die betriebsmäßige Kopplung der Überführungsvorrichtung mit der Steuervorrichtung derart zu verstehen, dass diese durchaus auch durch ein einzelnes elektronisches Bauelement, wie beispielsweise einen Micro-Controller gebildet sein kann, oder dass beide Funktionalitäten in einem übergeordneten Steuerungssystem für eine Gesamtanlage integriert sein können.

Zuletzt kann die erfindungsgemäße Transportvorrichtung derart gebildet sein, dass sie ferner einen Boden umfasst, auf welchem die Objekte transportiert werden, wobei die Weichenelemente frei von Böden sind. Die geometrische Ausführung dieses Bodens kann wiederum gegebenenfalls der Geometrie der zu transportierenden Objekte angepasst werden. Auf diese Weise können die Objekte während ihres Transports durch die Transportvorrichtung auf dem genannten Boden abgestützt sein, während sich die Weichenelemente oberhalb dieses Bodens befinden und somit lediglich lateral mit den einzelnen Objekten in Kontakt kommen. Auf diese Weise wird ein mögliches Verkanten der Objekte verhindert, das auftreten könnte, wenn die Weichenelemente selbst einen Boden aufweisen würden, da auf diese Weise der Boden der Transportvorrichtung völlig eben und ohne funktionale Elemente zur Führung der Objekte ausgebildet sein kann.

Zuletzt sei noch darauf hingewiesen, dass die erfindungsgemäße Transportvorrichtung modular aufgebaut sein kann, um auf verschiedene Geometrien und Abmessungen der zu transportierenden Objekte anpassbar zu sein. Hierzu kann beispielsweise ein System, bestehend aus mehreren Paaren von Sternrädern, die jeweils auf eine Art von Objekten abgestimmt sind, sowie einer jeweiligen zugehörigen Weichenvorrichtung vorgesehen werden, die in der Anzahl ihrer Weichenelemente und deren Geometrien sowie auch ihrer Ansteuerung ebenfalls auf die entsprechenden Objekte angepasst ist. Somit können dann in einem Fall, in dem der Typ der zu transportierenden Objekte im Betrieb der Anlage geändert werden soll, die Sternräder und die Weichenvorrichtung gemeinsam ersetzt werden, während weitere Komponenten wie Antriebe und Zuführ- bzw. Abführvorrichtungen für die Objekte unverändert verbleiben können.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
- Figur 1: eine Draufsicht auf eine erfindungsgemäße Transportvorrichtung mit einer erfindungsgemäßen Weichenvorrichtung in einer ersten Arbeitsposition;
- Figur 2: die Vorrichtung aus Figur 1 beim Übergang in eine zweite Arbeitsposition; und
- Figur 3: die Vorrichtung aus den Figuren 1 und 2 in der zweiten Arbeitsposition.

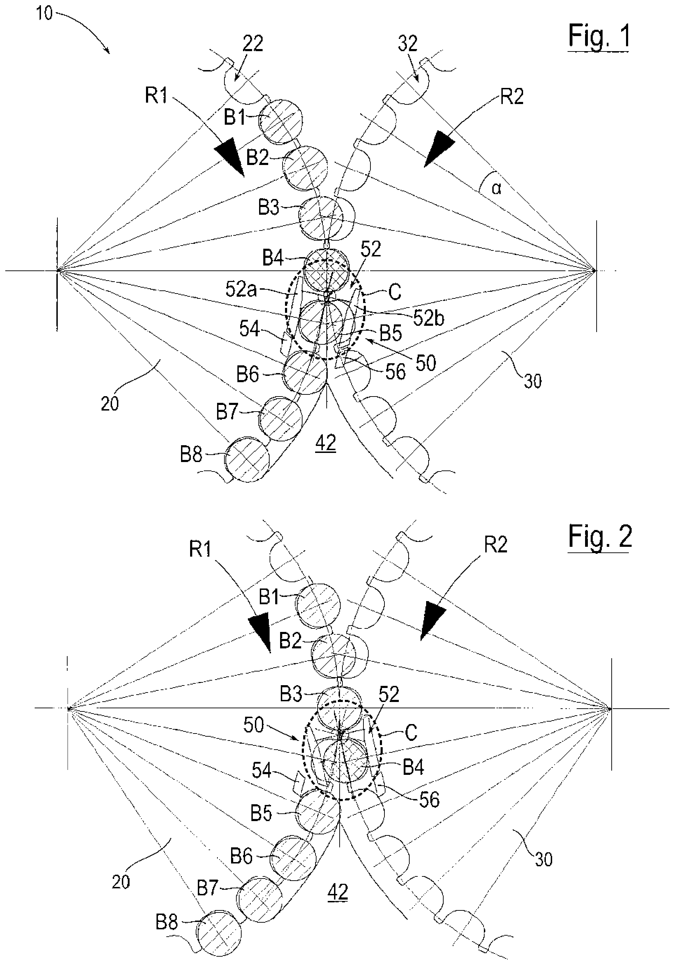

Die Figuren 1 bis 3 zeigen jeweils eine erfindungsgemäße Transportvorrichtung für Objekte in einer Draufsicht, die ganz allgemein mit dem Bezugszeichen 10 bezeichnet ist, wobei die Figuren jeweils ebenfalls acht der genannten Objekte zeigen, die mit den Bezugszeichen B1 bis B8 bezeichnet sind. Bei den Objekten B1 bis B8 kann es sich beispielsweise um Flaschen, Ampullen oder andere im Wesentlichen zylinderförmige Objekte handeln, wobei mit geringen Abwandlungen an der Geometrie der Vorrichtung 10 auch Objekte mit anderen Querschnitten transportierbar wären.

Zum Transport dieser Objekte B1 bis B8 umfasst die Transportvorrichtung 10 ein erstes und ein zweites Sternrad 20 und 30, die an ihren Umfängen jeweils Ausnehmungen 22 und 32 aufweisen, die in ihrer Form der Außenform der Objekte B1 bis B8 entsprechen, und die regelmäßig voneinander beabstandet sind, jeweils entsprechend Winkeln α bezogen auf den Gesamtumfang des jeweiligen Sternrads 20 bzw. 30. Um die Objekte B1 bis B8 in den Ausnehmungen 22 und 32 zu halten, sind ferner aus Gründen der Übersichtlichkeit nicht gezeigte Führungsschienen vorgesehen, die im Wesentlichen der Form der Außenumfänge der Sternräder in einem geeigneten Abstand folgen.

Weiterhin sind in den Figuren 1 bis 3 jeweils die Drehrichtungen der beiden Sternräder 20 und 30 durch entsprechende Pfeile dargestellt und mit den Bezugszeichen R1 und R2 bezeichnet. Hierbei dreht sich das erste Sternrad 20 im Uhrzeigersinn und das zweite Sternrad 30 im Gegenuhrzeigersinn, wobei vom ersten Sternrad 20 dementsprechend die Reihe von Objekten B1 bis B8 an das zweite Sternrad 30 herangeführt werden. Im Bereich des geringsten Abstands zwischen den beiden Sternrädern 20 und 30 ist dementsprechend ein Übergabepunkt C vorgesehen, an welchem die Objekte B1 bis B8 in gleichem Maße in entsprechenden Ausnehmungen 22 bzw. 32 des ersten und zweiten Sternrads 20 und 30 einliegen. Der Begriff des "Übergabepunkts" ist hierbei nicht streng geometrisch zu verstehen, so dass der Bereich C in den Figuren 1 bis 3 ovalförmig dargestellt ist.

Zuletzt zeigen die Figuren 1 bis 3 noch ein Führungselement 42, das sich in Form eines Dreieck in Bewegungsrichtung der Objekte B1 bis B8 hinter dem Übergabepunkt C derart erstreckt, dass sowohl vom ersten Sternrad 20 als auch vom zweiten Sternrad 30 weiter transportierte Objekte B1 bis B8 von diesem geführt und somit am entsprechenden Sternrad gehalten werden.

Um nun selektiv einzelne der Objekte B1 bis B8 an dem Übergabepunkt C vom ersten Sternrad 20 auf das zweite Sternrad 30 übergeben zu können, ist im Bereich des Übergabepunkts C zuletzt eine erfindungsgemäße Weichenvorrichtung 50 vorgesehen, die ein erstes, ein zweites und ein drittes Weichenelement 52, 54 und 56 umfasst. Die einzelnen Weichenelemente 52 bis 56 sind hierbei im Wesentlichen durch Wandabschnitte gebildet, die sich in den Figuren 1 bis 3 in die Zeichnungsebene hinein erstrecken, senkrecht zu den Ebenen der Sternräder ausgerichtet sind, und an denen entlang die von den Sternrädern 20 bzw. 30 geführten Objekte B1 bis B8 durch den durch sie gebildeten Durchgang geführt werden können.

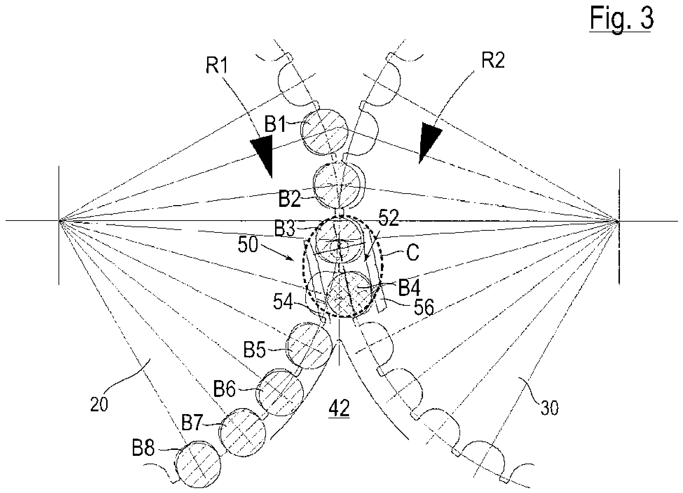

Hierbei umfasst das erste Weichenelement 52 zwei Wände 52a und 52b, die sich in Bewegungsrichtung der Objekte B1 bis B8 jeweils beiderseits der Objekte erstrecken, wobei in den Arbeitspositionen aus den Figuren 1 und 3 das zweite Weichenelement 54 eine Verlängerung der ersten Wand 52a des ersten Weichenelements 52 bildet und das dritte Weichenelement 56 eine Verlängerung der zweiten Wand 52b des ersten Weichenelements 52 bildet. Hierzu sind die Trennlinien zwischen den entsprechenden ersten und zweiten Wandteilen 52a und 52b des ersten Weichenelements 52 einerseits und dem zweiten und dritten Weichenelement 54 und 56 andererseits jeweils Kreisbögen folgend gezogen, was den im Folgenden im Zusammenhang mit Figur 2 beschriebenen vorteilhaften Effekt eines noch kleineren möglichen Abstands zwischen den Objekten B1 bis B8 an den Sternrädern mit sich bringt und eine ungehinderte Bewegung der Weichenelemente 52, 54 und 56 zueinander ermöglicht.

Zunächst einmal befinden sich jedoch in der Figur 1 die Weichenelemente 52, 54 und 56 in einer jeweiligen ersten Position, so dass die Weichenvorrichtung 50 in einer ersten Arbeitsposition ist. Hierbei bilden die erste Wand 52a des ersten Weichenelements 52 und das zweite Weichenelement 54 einerseits und die zweite Wand 52b des ersten Weichenelements 52 und das dritte Weichenelement 56 einen Durchgang, durch welchen hindurch die Objekte B1 bis B8 geleitet werden, wobei aufgrund der relativen Orientierung der Weichenvorrichtung und der beiden Sternräder 20 und 30 die Objekte B1 bis B8 in dieser Arbeitsposition der Weichenvorrichtung 50 an dem ersten Sternrad 20 verbleiben.

Wird nun festgestellt, dass eines der Objekte, beispielsweise das Objekt B4 auf das zweite Sternrad 30 übergeben werden soll, beispielsweise weil in einem früheren Arbeitsschritt festgestellt worden ist, dass dieses Objekt B4 eine Beschädigung aufweist und daher auszusortieren ist, löst eine nicht dargestellte Überführungsvorrichtung in Zusammenwirkung mit einem jeweiligen Antrieb (ebenfalls nicht dargestellt), beispielsweise einem elektrischen Stellmotor, für das erste bis dritte Weichenelement 52, 54 und 56 eine Überführung der Weichenvorrichtung 50 in die in Figur 3 gezeigte zweite Arbeitsposition aus, in der die Weichenvorrichtung derart zu dem ersten und zweiten Sternrad 20 und 30 orientiert ist, dass das Objekt B4 an das zweite Sternrad 30 übergeben wird.

Hierbei wird, wie in Figur 2 zu erkennen ist, keine gemeinsame Überführung der drei Weichenelemente 52, 54, und 56 vorgenommen, sondern es werden zunächst einmal das erste und das dritte Weichenelement 52 und 56 mittels einer Schwenkbewegung zu ihrer jeweiligen zweiten Position überführt, während das zweite Weichenelement 54 zunächst einmal noch in seiner ersten Position verbleibt. Es sei an dieser Stelle erneut darauf verwiesen, dass neben der in der vorliegenden Ausführungsform eingesetzten Schwenkbewegung der Weichenelemente auch andere Bewegungsformen denkbar wären, beispielsweise eine kombinierte Dreh- und Schubbewegung. Es sei ebenfalls daran erinnert, dass die Schwenkbewegung des ersten und dritten Weichenelements 52 und 56 nicht streng gleichzeitig beginnen muss, sondern dass abhängig von der Geometrie der Objekte auch eine Verzögerung zwischen dem ersten und dem dritten Weichenelement 52 und 56 vorgesehen werden kann.

Wie in Figur 2 zu erkennen ist, befindet sich zum Zeitpunkt des Auslösens der Schwenkbewegung des ersten und dritten Weichenelement 52 und 56 noch das Objekt B5 im Bereich des zweiten Weichenelements 54, so dass ein Schwenken dieses zweiten Weichenelements 54 zu diesem Zeitpunkt noch nicht möglich ist, während demhingegen das erste Weichenelement 52 und das dritte Weichenelement 56 bereits frei zu schwenken sind, was insbesondere durch die definierte Geometrie der Trennlinie zwischen dem ersten und zweiten Weichenelement 52 und 54 in Form eines Kreisbogens ermöglicht wird, da hierdurch das erste Weichenelement 52 mit seinem in Bewegungsrichtung der Objekte B1 und B8 vorderen Ende gerade in den Freiraum zwischen dem Objekt B4 und dem Objekt B5 hineinschwenken kann.

Hierdurch wird ein gegenüber bekannten Vorrichtungen deutlich verringerter Abstand beispielsweise zwischen den Objekten B4 und B5 an den Umfängen der Sternräder 20 und 30 erreicht, wodurch mit der vorliegenden Weichenvorrichtung deutlich erhöhte Taktzahlen und Betriebsgeschwindigkeiten erreicht werden können, ohne dass die Rotationsgeschwindigkeit der Sternräder erhöht werden müsste, was ebenfalls Nachteile mit sich bringen könnte.

Es versteht sich, dass das erneute Überführen von der in Figur 3 gezeigten zweiten Arbeitsposition der Weichenvorrichtung 50 in die in Figur 1 gezeigte erste Position der Weichenvorrichtung 50 in ähnlicher, jedoch umgekehrter Weise stattfindet, so dass hierbei zunächst einmal das erste Weichenelement 52 und das zweite Weichenelement 54 synchron (oder minimal zeitverzögert) in ihre jeweilige erste Position überführt werden und das dritte Weichenelement 56 zunächst einmal in seiner zweiten Position verbleibt, und erst wenn ein entsprechendes stromabwärtiges Objekt aus dem Bereich des dritten Weichenelements 56 durch das zweite Sternrad 30 herausrotiert worden ist, wird auch das dritte Weichenelement 56 abschließend wieder in seine erste Position überführt, so dass letztlich wieder die erste Arbeitsposition aus Figur 1 von der Weichenvorrichtung 50 eingenommen wird.

## Patentansprüche

1. Weichenvorrichtung für einen Übergabepunkt (C) zwischen einem ersten und einem zweiten rotierbaren Sternrad (20, 30), an welchem von dem ersten Sternrad (20) Objekte (B1 - B8) selektiv zu dem zweiten Sternrad (30) übergebbar sind, umfassend:
- ein zweiwandiges erstes Weichenelement (52), dessen erste und zweite Wand (52a, 52b) sich derart um den Übergabepunkt (C) herum erstrecken, dass zwischen ihnen ein Durchgang für die Objekte (B1 - B8) gebildet ist;
wobei das erste Weichenelement (52) zwischen einer ersten Position und einer zweiten Position verlagerbar gehaltert ist, wobei in der ersten Position in den Durchgang des ersten Weichenelements (52) einlaufende Objekte (B1 - B8) an dem ersten Sternrad (20) verbleiben und in der zweiten Position einlaufende Objekte (B1 - B8) an das zweite Sternrad (30) übergeben werden;
**dadurch gekennzeichnet, dass** die Weichenvorrichtung umfasst:
- ein zweites und ein drittes Weichenelement (54, 56), welche derart angeordnet und gehaltert sind, dass sie in der ersten Position und der zweiten Position des ersten Weichelements (52) jeweils Verlängerungen der ersten bzw. zweiten Wand (52a, 52b) des ersten Weichenelements (52) bilden und hierzu ebenfalls jeweils zwischen einer jeweiligen ersten und zweiten Position verlagerbar sind; und
- eine Überführungsvorrichtung, welche dazu eingerichtet ist, die Überführung des ersten bis dritten Weichenelements (52 - 56) durchzuführen, indem :
a) die Überführung von der jeweiligen ersten Position in die jeweilige zweite Position derart bewirkt wird, dass zunächst eine Überführung des ersten und dritten Weichenelements (52, 56), ggf. leicht zeitverzögert, ausgelöst wird und anschließend eine Überführung des zweiten Weichenelements (54) ausgelöst wird; und
b) die Überführung von der jeweiliger zweiten Position in die jeweilige erste Position derart bewirkt wird, dass zunächst eine Überführung des ersten und zweiten Weichenelements (52, 54), ggf. leicht zeitverzögert, ausgelöst wird und anschließend eine Überführung des dritten Weichenelements (56) ausgelöst wird.

2. Weichenvorrichtung nach Anspruch 1, **dadurch gekennzeichnet, dass** die erste und zweite Wand (52a, 52b) des ersten Weichenelements (52) individuell verlagerbar ausgebildet sind und die Überführungsvorrichtung dazu eingerichtet ist, die beiden Wände (52a, 52b) individuell zu verlagern.

3. Weichenvorrichtung nach Anspruch 1 oder 2, umfassend eine größere Anzahl von Weichenelementen, beispielsweise zusätzlich vierte und fünfte Weichenelemente, welche wiederum in den entsprechenden Arbeitspositionen Verlängerungen des zweiten bzw. dritten Weichenelements (54, 56) bilden.

4. Weichenvorrichtung nach einem der Ansprüche 1 bis 3, **dadurch gekennzeichnet, dass** die Überführungsvorrichtung dazu eingerichtet ist, die jeweilige Überführung des ersten bis dritten Weichenelements (52 - 56), sowie gegebenenfalls weiterer Weichenelemente, mittels eines Schwenkens um eine gemeinsame Schwenkachse durchzuführen.

5. Weichenvorrichtung nach einem der Ansprüche 1 bis 4, **dadurch gekennzeichnet, dass** die Trennlinie zwischen der ersten Wand (52a) des ersten Weichenelements (52) und dem zweiten Weichenelement (54) und/oder zwischen der zweiten Wand (52b) des ersten Weichenelements (52) und dem dritten Weichenelement (56) schräg zur Erstreckungsrichtung der jeweiligen Wand (52a, 52b) verläuft, insbesondere einem Kreisbogen folgend.

6. Weichenvorrichtung nach einem der vorhergehenden Ansprüche, **dadurch gekennzeichnet, dass** jedem der Weichenelemente (52 - 56) zu dessen Überführung zwischen der jeweiligen ersten und zweiten Position eine eigene Antriebsvorrichtung zugeordnet ist, welche Antriebsvorrichtungen durch die Überführungsvorrichtung koordiniert betreibbar sind.

7. Weichenvorrichtung nach Anspruch 6, wobei wenigstens eine der Antriebsvorrichtungen, vorzugsweise sämtliche Antriebsvorrichtungen, wenigstens einen elektrischen Antrieb, insbesondere einen Stellmotor, oder einen pneumatischen Antrieb umfassen.

8. Transportvorrichtung für Objekte (B1 - B8), insbesondere zylinderförmige Objekte wie Flaschen und/oder Ampullen, umfassend ein erstes und ein zweites rotierbares Sternrad (20, 30), welche derart angeordnet sind, dass zwischen ihnen ein Übergabepunkt (C) gebildet ist, sowie eine Weichenvorrichtung (50) nach einem der vorhergehenden Ansprüche zur selektiven Übergabe von Objekten (B1 - B8) von dem ersten Sternrad (20) zu dem zweiten Sternrad (30).

9. Transportvorrichtung nach Anspruch 8, **dadurch gekennzeichnet, dass** die Überführungsvorrichtung betriebsmäßig mit einer Steuervorrichtung für die beiden Sternräder (20, 30) derart gekoppelt ist, dass die Überführung der Weichenelemente (52 - 56) an die Rotationsgeschwindigkeit der Sternräder (20, 30) angepasst oder anpassbar ist.

10. Transportvorrichtung nach Anspruch 8 oder 9, **dadurch gekennzeichnet, dass** sie ferner einen Boden umfasst, auf welchem die Objekte (B1 - B8) transportiert werden, wobei die Weichenelemente frei von Böden sind.

## Claims

1. Switch device for a transfer point (C) between a first and a second rotatable star wheel (20, 30), at which transfer point objects (B1-B8) can be selectively transferred from the first star wheel (20) to the second star wheel (30), comprising:
- a two-walled first switch element (52), the first and second walls (52a, 52b) of which extend around the transfer point (C) such that a passage for the objects (B1-B8) is formed therebetween;
the first switch element (52) being displaceably held between a first position and a second position, objects (B1-B8) entering the passage of the first switch element (52) remaining on the first star wheel (20) in the first position and objects (B1-B8) entering the passage being transferred to the second star wheel (30) in the second position;
**characterized in that** the switch device comprises:
- a second and a third switch element (54, 56), which are arranged and held such that they each form extensions of the first and second wall (52a, 52b), respectively, of the first switch element (52) in the first position and the second position of the first switch element (52) and, for this purpose, can also be displaced between respective first and second positions; and
- a transition device, which is designed to carry out the transition of the first to third switch elements (52-56), by:
a) the transition from the relevant first position into the relevant second position being produced such that first transition of the first and third switch elements (52, 56) is initiated, optionally with a slight time delay, and then transition of the second switch element (54) is initiated; and
b) the transition from the relevant second position into the relevant first position being produced such that first transition of the first and second switch elements (52, 54) is initiated, optionally with a slight time delay, and then transition of the third switch element (56) is initiated.

2. Switch device according to claim 1, **characterised in that** the first and second walls (52a, 52b) of the first switch element (52) are designed so as to be individually displaceable and the transition device is designed to individually displace the two walls (52a, 52b).

3. Switch device according to either claim 1 or claim 2, comprising a greater number of switch elements, for example additional fourth and fifth switch elements, which in turn form extensions of the second and third switch elements (54, 56), respectively, in the corresponding working positions.

4. Switch device according to any of claims 1 to 3, **characterised in that** the transition device is designed to carry out the transition in each case of the first to third switch elements (52-56), and optionally further switch elements, by means of pivoting about a common pivot axis.

5. Switch device according to any of claims 1 to 4, **characterised in that** the separating line between the first wall (52a) of the first switch element (52) and the second switch element (54) and/or between the second wall (52b) of the first switch element (52) and the third switch element (56) can extend obliquely to the direction of extension of the wall (52a, 52b) in each case, in particular following a circular arc.

6. Switch device according to any of the preceding claims, **characterised in that** each of the first to third switch elements (52-56) is assigned an individual drive device for its transition between the first and second positions in each case, which drive devices can be operated in a coordinated manner by the transition device.

7. Switch device according to claim 6, wherein at least one of the drive devices, preferably all of the drive devices, comprises at least one electric drive, in particular a servomotor, or a pneumatic drive.

8. Transport device for objects (B1-B8), in particular cylindrical objects such as bottles and/or ampoules, comprising a first and a second rotatable star wheel (20, 30), which are arranged such that a transfer point (C) is formed therebetween, and a switch device (50) according to any of the preceding claims for selectively transferring objects (B1-B8) from the first star wheel (20) to the second star wheel (30).

9. Transport device according to claim 8, **characterised in that** the transition device is operatively coupled to a control device for the two star wheels (20, 30) such that the transition of the switch elements (52 - 56) is or can be adapted to the rotational speed of the star wheels (20, 30).

10. Transport device according to either claim 8 or claim 9, **characterised in that** it further comprises a base on which the objects (B1-B8) are transported, the switch elements not having bases.

## Revendications

1. Dispositif d'aiguillage pour un point de transfert (C) entre une première et une deuxième roue-étoile rotative (20, 30), au niveau duquel des objets (B1 - B8) peuvent être transférés de manière sélective de la première roue-étoile (20) à la deuxième roue-étoile (30), comprenant :
- un premier élément d'aiguillage (52) à deux parois, dont la première et la deuxième paroi (52a, 52b) s'étendent autour du point de transfert (C) de telle sorte qu'un passage pour les objets (B1 - B8) est formé entre elles ;
dans lequel le premier élément d'aiguillage (52) sont supporté de manière déplaçable entre une première position et une deuxième position, dans lequel des objets (B1 - B8) entrant dans le passage du premier élément d'aiguillage (52) dans la première position restent sur la première roue-étoile (20) et des objets (B1 - B8) entrant dans la deuxième position sont transférés à la deuxième roue-étoile (30) ;
**caractérisé en ce que** le dispositif d'aiguillage comprend :
- un deuxième et un troisième élément d'aiguillage (54, 56) qui sont disposés et maintenus de telle sorte que, dans la première position et la deuxième position du premier élément d'aiguillage (52), ils forment respectivement des prolongements de la première et de la deuxième paroi (52a, 52b) du premier élément d'aiguillage (52) et peuvent également être déplacés à cet effet respectivement entre une première et une deuxième position respectives ; et
- un dispositif de transfert qui est conçu pour effectuer le transfert du premier au troisième élément d'aiguillage (52 - 56), **en ce que** :
a) le transfert de la première position respective à la deuxième position respective est effectué de telle sorte qu'un transfert du premier et du troisième élément d'aiguillage (52, 56) est d'abord déclenché, le cas échéant avec un léger retard, et qu'un transfert du deuxième élément d'aiguillage (54) est ensuite déclenché ; et
b) le transfert de la deuxième position respective à la première position respective est effectué de telle sorte qu'un transfert du premier et du deuxième élément d'aiguillage (52, 54) est d'abord déclenché, le cas échéant avec un léger retard, et qu'un transfert du troisième élément d'aiguillage (56) est ensuite déclenché.

2. Dispositif d'aiguillage selon la revendication 1, **caractérisé en ce que** la première et la deuxième paroi (52a, 52b) du premier élément d'aiguillage (52) sont conçues pour être déplaçables individuellement et le dispositif de transfert est agencé pour déplacer individuellement les deux parois (52a, 52b).

3. Dispositif d'aiguillage selon la revendication 1 ou 2, comprenant un plus grand nombre d'éléments d'aiguillage, par exemple en outre des quatrième et cinquième éléments d'aiguillage, qui forment à leur tour des prolongements du deuxième ou du troisième élément d'aiguillage (54, 56) dans les positions de travail correspondantes.

4. Dispositif d'aiguillage selon l'une des revendications 1 à 3, **caractérisé en ce que** le dispositif de transfert est conçu pour effectuer le transfert respectif du premier au troisième élément d'aiguillage (52 - 56), ainsi que le cas échéant d'autres éléments d'aiguillage, au moyen d'un pivotement autour d'un axe de pivotement commun.

5. Dispositif d'aiguillage selon l'une des revendications 1 à 4, **caractérisé en ce que** la ligne de séparation entre la première paroi (52a) du premier élément d'aiguillage (52) et le deuxième élément d'aiguillage (54) et/ou entre la deuxième paroi (52b) du premier élément d'aiguillage (52) et le troisième élément d'aiguillage (56) s'étend en oblique par rapport à la direction d'extension de la paroi respective (52a, 52b), notamment en suivant un arc de cercle.

6. Dispositif d'aiguillage selon l'une des revendications précédentes, **caractérisé en ce qu'**à chacun des éléments d'aiguillage (52-56) est associé un dispositif d'entraînement propre pour son transfert entre la première et la deuxième position respective, lesquels dispositifs d'entraînement peuvent être actionnés de manière coordonnée par le dispositif de transfert.

7. Dispositif d'aiguillage selon la revendication 6, dans lequel au moins l'un des dispositifs d'entraînement, de préférence tous les dispositifs d'entraînement, comprennent au moins un entraînement électrique, en particulier un servomoteur, ou un entraînement pneumatique.

8. Dispositif de transport d'objets (B1 - B8), notamment d'objets cylindriques tels que des bouteilles et/ou des ampoules, comprenant une première et une deuxième roue-étoile (20, 30) rotatives, qui sont disposées de telle sorte qu'un point de transfert (C) est balisé entre elles, ainsi qu'un dispositif d'aiguillage (50) selon l'une des revendications précédentes pour le transfert sélectif d'objets (B1 - B8) de la première roue-étoile (20) à la deuxième roue-étoile (30).

9. Dispositif de transport selon la revendication 8, **caractérisé en ce que** le dispositif de transfert est couplé en fonctionnement à un dispositif de commande des deux roues-étoile (20, 30) de manière à ce que le transfert des éléments d'aiguillage (52 - 56) soit adapté ou adaptable à la vitesse de rotation des roues-étoile (20, 30).

10. Dispositif de transport selon la revendication 8 ou 9, **caractérisé en ce qu'**il comprend en outre un plancher sur lequel les objets (B1 - B8) sont transportés, les éléments d'aiguillage étant dépourvus de plancher.
